(19) Europäisches Patentamt
European Patent Office
Office européen des brevets

(11) **EP 2 520 361 A1**

(12) **EUROPEAN PATENT APPLICATION**

(43) Date of publication:
**07.11.2012 Bulletin 2012/45**

(51) Int Cl.:
*B01J 8/08* (2006.01)   *B01J 8/12* (2006.01)
*B01J 8/16* (2006.01)   *B01J 8/38* (2006.01)
*B01J 19/12* (2006.01)   *C01B 3/06* (2006.01)
*C01B 3/10* (2006.01)   *C01B 13/02* (2006.01)
*C21B 15/00* (2006.01)   *C22B 5/10* (2006.01)
*C22B 5/16* (2006.01)

(21) Application number: **11003735.5**

(22) Date of filing: **06.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zurich**
**8092 Zürich (CH)**

(72) Inventors:
• **Scheffe, Jonathan**
  **8006 Zürich (CH)**
• **Haueter, Philipp**
  **5000 Aarau (CH)**
• **Steinfeld, Aldo**
  **5200 Brugg (CH)**

(54) **Method for thermochemically reacting a particulate material and apparatus for conducting said method**

(57)   The invention relates to a method for thermochemically reacting a particulate material, comprising the steps of providing first particles (19) of said material, introducing said first particles (19) into a first reactor (13a, b), applying external energy (21) to said first particles (19) in said first reactor (13a,b) such that said first particles (19) undergo a thermochemical reaction, and removing said thermochemically treated first particles (19) from said first reactor (13a,b).

A continuous process can be realised by providing said first reactor (13a,b) with at least one extended reaction zone (16, 16') comprising means (17) for constraining particle movement there through, applying the external energy (21) to said at least one reaction zone (16, 16'), and moving the first particles (19) through said at least one reaction zone (16, 16') for undergoing said thermochemical reaction such that they have a predetermined mean residence time within said at least one reaction zone (16, 16').

Fig.3

**Description**

BACKGROUND OF THE INVENTION

The present invention relates to thermochemical reaction technology. It refers to a method for thermochemically reacting a particulate material according to the preamble of claim 1. It further refers to apparatus for conducting such method.

PRIOR ART

Potentially the most efficient process to convert solar energy into hydrogen is via solar-thermal water splitting, rather than via solar electricity (PV/electrolysis) or via photons (photolysis) (Perkins, C. and A.W. Weimer, Solar-Thermal Production of Renewable Hydrogen. Aiche Journal, 2009. 55(2): p. 286-293; Turner, J., et al., Renewable hydrogen production. International Journal of Energy Research, 2008. 32(5): p. 379-407). This process avoids the inefficiencies of some of the other processes by thermally decomposing $H_2O$ directly into $H_2$ and $O_2$. Thermodynamically, the spontaneous decomposition of water at 1 atm occurs at temperatures greater than 4300 K (Perkins, C. and A.W. Weimer, Solar-Thermal Production of Renewable Hydrogen. Aiche Journal, 2009. 55(2): p. 286-293), but it is possible to decompose a significant amount of water at temperatures as low as 2500 K (Etievant, C., SOLAR HIGH-TEMPERATURE DIRECT WATER SPLITTING - A REVIEW OF EXPERIMENTS IN FRANCE. Solar Energy Materials, 1991. 24 (1-4): p. 413-440). Conceptually, this process is very simple, but realistically there are many difficulties which prohibit its practicality in the near future. Firstly, reactor construction materials are a concern because there are very few materials capable of withstanding the high temperatures required. Furthermore, a potentially explosive mixture of $H_2$ and $O_2$ is generated if allowed to cool, and therefore must be separated either at high temperatures, or by rapid quenching, which is a highly energy intensive process (Baykara, S.Z., Experimental solar water thermolysis. International Journal of Hydrogen Energy, 2004. 29(14): p. 1459-1469).

Solar thermochemical gas splitting cycles have proven to be an attractive alternative to direct water splitting. The net result of these cycles is the same as direct water splitting $(heat + H_2O \rightarrow H_2 + \frac{1}{2}O_2)$, but the reaction is split into two or more reactions using chemical reactant intermediates. Generally, these cycles are characterized by a high temperature step in which the chemical reactant is thermally reduced via solar energy, and one or more lower temperature water splitting steps which may or may not require a thermal input. Currently there are more than 350 known thermochemical cycles, many of which have theoretical efficiencies of greater than 40% (McQuillan, B.W., et al. Meal sulfate water splitting thermochemical hydrogen production cycles. in The Second International Workshop on Hydrogen. 2007. Ghardaïa).

In addition to $H_2O$ splitting for $H_2$ production, $CO_2$ can be used as a feedstock for the production of CO $(heat + CO_2 \rightarrow CO + \frac{1}{2}O_2)$, which can then be converted to $H_2$ via the water gas shift reaction (Miller, J.E., et al., Metal oxide composites and structures for ultra-high temperature solar thermochemical cycles. Journal of Materials Science, 2008. 43(14): p. 4714-4728). A potentially more attractive process is the co-production of $H_2$ and CO to generate a syngas mixture. $CO_2$ can be co-fed with $H_2O$ to produce a syngas mixture which can be further processed into various carbon based fuels $(heat + \frac{H_2O}{CO_2} \rightarrow \frac{H_2}{CO} + \frac{1}{2}O_2)$ (Chueh, W.C., et al., High-Flux Solar-Driven Thermochemical Dissociation of CO2 and H2O Using Nonstoichiometric Ceria. Science, 2010. 330(6012): p. 1797-1801; Stamatiou, A., P.G. Loutzenhiser, and A. Steinfeld, Solar Syngas Production via H2O/CO2-Splitting Thermochemical Cycles with Zn/ZnO and FeO/Fe3O4 Redox Reactions. Chemistry of Materials, 2010. 22(3): p. 851-859). In fact, direct conversion to methane is possible in the presence of a metallic catalyst, such as Ni (Chueh, W.C. and S.M. Haile, Ceria as a Thermochemical Reaction Medium for Selectively Generating Syngas or Methane from H2O and CO2. Chemsuschem, 2009. 2(8): p. 735-739).

In general, the most conceptually simple cycles all occur in two distinct steps and do not require any hazardous chemical intermediates. These all involve the high temperature endothermic decomposition of a metal oxide (T generally > 1400 °C), and a lower temperature gas-splitting step to regenerate the metal oxide and produce $H_2$ and/or CO. Both ferrite and ceria based materials are particularly promising because cycle repeatability has been demonstrated with relative ease as compared to other thermochemical cycles, primarily because they do not undergo any phase changes (i.e. solid to liquid). Ferrites are realized by substituting transition metal oxides (M = Ni, Co, Mn) for Fe in $Fe_3O_4$ ($M_xFe_{3-x}O_4$). As a result the decomposition temperature is lowered by destabilizing the spinel phase, but the reduced phase is still capable of being re-oxidized to reform the ferrite (Allendorf, M.D., Two-Step Water Splitting Using Mixed-Metal Ferrites: Thermodynamic Analysis and Characterization of Synthesized Materials. Energy & Fuels, 2008. 22(6): p. 4115-4124).

Particularly promising ferrites that have been investigated include $CO_xFe_{3-x}O_4$ (Miller, J.E., et al., Metal oxide composites and structures for ultra-high temperature solar thermochemical cycles. Journal of Materials Science, 2008. 43(14): p. 4714-4728; Allendorf, M.D., Two-Step Water Splitting Using Mixed-Metal Ferrites: Thermodynamic Analysis and Characterization of Synthesized Materials. Energy & Fuels, 2008. 22(6): p. 4115-4124; Kodama, T., et al., Thermochemical hydrogen production by a redox system of ZrO2-supported Co (II)-ferrite. Solar Energy, 2005. 78(5): p. 623-631), $Ni_xFe_{3-x}O_4$ (Miller, J.E., et al., Metal oxide composites and structures for ultra-high temperature solar thermochemical cycles. Journal of Materials Science, 2008. 43 (14): p. 4714-4728; Allendorf, M.D., Two-Step Water Splitting Using Mixed-Metal Ferrites: Thermodynamic Analysis and Characterization of Synthesized Materials. Energy & Fuels, 2008. 22(6): p. 4115-4124; Kodama, T., N. Gokon, and R. Yamamoto, Thermochemical two-step water splitting by ZrO2-supported NixFe3-xO4 for solar hydrogen production. Solar Energy, 2008. 82(1): p. 73-79), and $Fe_3O_4$ (Stamatiou, A., P.G. Loutzenhiser, and A. Steinfeld, Solar Syngas Production via H2O/CO2-Splitting Thermochemical Cycles with Zn/ZnO and FeO/Fe3O4 Redox Reactions. Chemistry of Materials, 2010. 22(3): p. 851-859; Allendorf, M.D., Two-Step Water Splitting Using Mixed-Metal Ferrites: Thermodynamic Analysis and Characterization of Synthesized Materials. Energy & Fuels, 2008. 22(6): p. 4115-4124; Kodama, T., Y. Nakamuro, and T. Mizuno, A two-step thermochemical water splitting by iron-oxide on stabilized zirconia. Journal of Solar Energy Engineering-Transactions of the Asme, 2006. 128(1): p. 3-7).

Many times, the ferrites are supported on, or mixed with a sintering inhibitor such as $ZrO_2$, YSZ, or alumina. Kodama *et. al.* has observed the diffusion of $Fe^{2+}$ into YSZ to create a Fe-doped YSZ materials which is still active in the redox cycle and sinters less than bulk ferrite powders (Kodama, T., Y. Nakamuro, and T. Mizuno, A two-step thermochemical water splitting by iron-oxide on stabilized zirconia. Journal of Solar Energy Engineering-Transactions of the Asme, 2006. 128(1): p. 3-7). Additionally, the presence of $Al_2O_3$ has been shown to lead to the formation of an iron aluminate which aids in lowering the oxides decomposition temperature (Scheffe, J.R., J.H. Li, and A.W. Weimer, A spinel ferrite/hercynite water-splitting redox cycle. International Journal of Hydrogen Energy, 2010. 35(8): p. 3333-3340).

Several different groups have also investigated ceria-based materials as an alternative to ferrites because of their superior thermal stability and reaction rates. These include pure ceria ($CeO_2$) (Chueh, W.C., et al., High-Flux Solar-Driven Thermochemical Dissociation of CO2 and H2O Using Nonstoichiometric Ceria. Science, 2010. 330(6012): p. 1797-1801; Abanades, S. and G. Flamant, Thermochemical hydrogen production from a two-step solar-driven water-splitting cycle based on cerium oxides. Solar Energy, 2006. 80(12): p. 1611-1623) and doped ceria such as $Zr_xCe_{1-x}O_2$ (Abanades, S., et al., Investigation of reactive cerium-based oxides for H-2 production by thermochemical two-step water-splitting.

Journal of Materials Science. 45(15): p. 4163-4173), $Sm_{.15}Ce_{.85}O_2$ (Chueh, W.C. and S.M. Haile, Ceria as a Thermochemical Reaction Medium for Selectively Generating Syngas or Methane from H2O and CO2. Chemsuschem, 2009. 2(8): p. 735-739), and $CeO_2$-MOx (where M is Mn,Fe,Ni,Cu) (Kaneko, H., et al., Reactive ceramics of CeO2-MOx (M = Mn, Fe, Ni, Cu) for H-2 generation by two-step water splitting using concentrated solar thermal energy. Energy, 2007. 32(5): p. 656-663). Doped ceria has the advantage of decomposing at lower temperatures than pure ceria.

Continuous, semi-continuous, and batch reactors have been proposed for both ferrite and ceria based redox cycles. Kaneko et. al. have described a rotary reactor in which a ferrite is mounted onto a rotating disk exposed to solar irradiation, thereby producing continuous amounts fuel and $O_2$ in separate chambers (Kaneko, H., et al., Rotary-type solar reactor for solar hydrogen production with two-step water splitting process. Energy & Fuels, 2007. 21(4): p. 2287-2293). A similar design has been proposed by Diver *et. al.* at Sanida National Laboratories (Diver, R.B., et al., Solar thermochemical water-splitting ferrite-cycle heat engines. Proceedings of the ASME International Solar Energy Conference, 2007: p. 301-309). Oppositely rotating disks of a redox-active metal oxide are exposed to solar radiation and $H_2O$ and or $CO_2$ on opposing ends resulting in simultaneous production of CO and/or $H_2$ and $O_2$. Roeb *et. al.* has designed a semi-continuous ferrite reactor with two parallel reaction chambers (Roeb, M., et al., Operational strategy of a two-step thermochemical process for solar hydrogen production. International Journal of Hydrogen Energy, 2009: p. 4537-45). Within each chamber is a ferrite-coated monolith, and while one is directly exposed to solar radiation, the opposing chamber is undergoing oxidation with $H_2O$ to produce $H_2$. The solar radiation is alternatively cycled between each monolith, depending on the redox reaction occurring. Finally, Steinfeld *et. al.* has designed a batch reactor in which a porous $CeO_2$ substrate is cycled between redox reactions by alternating its exposure to solar radiation and $CO_2$ and/or $H_2O$ (Chueh, W.C., et al., High-Flux Solar-Driven Thermochemical Dissociation of CO2 and H2O Using Nonstoichiometric Ceria. Science, 2010. 330(6012): p. 1797-1801).

Document US 2006/0188433 A1 discloses a method and apparatus for thermal reduction of metal oxide particles in a high temperature aerosol flow reactor heated using concentrated sunlight. In an aerosol flow reactor or an aerosol transport reactor, solid or liquid particles are transported into and/or through the reactor via entrainment in a gas stream. The metal oxide particles flow in dilute phase in an entrainment gas and are heated through indirect solar thermal heating to a temperature at which they undergo a reduction reaction. The radiation heat transfer to the metal oxide particles is claimed to occur at extremely high rates. The "indirect" heating means that the heating is by radiation from a heated wall that is itself heated indirectly or directly by solar radiation.

This aerosol flow reactor concept has the disadvantages, that a complicated gas management is required, that the introduction of heat is reduced to a radiation process, and that the residence time is quite small.

SUMMARY OF THE INVENTION

It is an object of the invention, to provide a method for thermochemically reacting a particulate material, which avoids the disadvantages of the known methods, can be practised in a continuous process with improved efficiency and controllability, and can be advantageously used to generate gaseous fuels concentrated solar radiation.

It is another object of the invention to provide an apparatus for conducting the method according to the invention.

These and other objects are obtained by a method according to claim 1 and an apparatus according to claim 14.

The method according to the invention for thermochemically reacting a particulate material comprises the steps of providing first particles of said material, introducing said first particles into a first reactor, applying external energy to said first particles in said first reactor such that said first particles undergo a thermochemical reaction, and removing said thermochemically treated first particles from said first reactor. The method is characterised in that said first reactor has at least one extended reaction zone comprising means for constraining particle movement there through, the external energy is applied to said at least one reaction zone, and the first particles are moved through said at least one reaction zone for undergoing said thermochemical reaction such that they have a predetermined mean residence time within said at least one reaction zone.

According to one embodiment of the invention said at least one reaction zone comprises as a particle movement constraining means a packed bed of second particles, which are larger then said first particles, and said first particles are removed through said packed bed of second particles by means of at least one driving force.

According to another embodiment of the invention said packed bed of second particles extends in vertical direction, and the gravitational force is used as said at least one driving force.

According to another embodiment of the invention said second particles are of spherical shape.

According to just another embodiment of the invention the size of said first particles ranges from 5 nm to 1 mm.

According to another embodiment of the invention mechanical and/or acoustical vibrations are introduced into said at least one reaction zone to enhance movement of said first particles through said at least one reaction zone.

According to another embodiment of the invention said mechanical and/or acoustical vibrations are used to control the mean residence time of said first particles in said at least one extended reaction zone.

According to a further embodiment of the invention said first reactor comprises a plurality of successive reaction zones, and said first particles are moved through said successive reaction zones for undergoing said thermochemical reaction.

According to another embodiment of the invention the material of said first particles comprises a metal oxide, and said thermo-chemical reaction is the thermal reduction of said metal oxide.

According to another embodiment of the invention the material of said first particles comprises a metal oxide, and said thermo-chemical reaction is the carbothermal reduction of said metal oxide.

Especially, a metal oxide of the formula $Ce_{1-x}M_xO_2$ is used, where M is a metal consisting of Ce, Gd, Sm, Fe, Zr, Y, or a combination thereof.

Alternatively, a metal oxide of the formula $M_xFe_{3-x}O_4$ is used, where M is a metal consisting of Fe, Co, Ni, Mn, Zn, or a combination thereof.

Alternatively, a metal oxide of the formula $M_xO_y$ is used, where M is a metal consisting of Zn, Fe, Sn, Ti, Ce, or a combination thereof.

According to another embodiment of the invention the material of said first particles comprises a carbonaceous material, and said thermo—chemical reaction is the thermal pyrolysis of said carbanaceous material.

According to another embodiment of the invention the material of said first particles comprises a carbonaceous material, and said thermo—chemical reaction is the thermal gasification of said carbanaceous material.

According to another embodiment of the invention the material of said first particles comprises a metallic carbonate, and said thermo—chemical reaction is the thermal decomposition of said metallic carbonate.

Especially, the metallic carbonate is calcium carbonate.

According to another embodiment of the invention the material of said first particles comprises a metal containing mineral, and said thermo-chemical reaction is the conversion of said metal containing mineral to the metal oxide.

Especially, the metal containing mineral is bauxite.

Especially, the metal containing mineral is willemite.

According to another embodiment of the invention heat is used as said external energy.

According to another embodiment of the invention radiation is used as said external energy.

Especially, said radiation is concentrated solar radiation.

According to just another embodiment of the invention said thermochemically treated first particles are chemically transformed in a second process, thereby reversing said thermochemical reaction, and said chemically transformed first particles are fed back into the first reactor, thereby establishing a closed cycle for said first particles.

According to a preferred embodiment of the invention said thermochemical treatment is a reduction, and said chemical transformation is an oxidation. Especially, said oxidation is done by bringing said first particles in contact with an oxidising agent in a second reactor.

Preferably, said second reactor is a fluidised bed reactor.

According to another embodiment of the invention said oxidising agent comprises $H_2O$ and/or $CO_2$.

According to another embodiment of the invention external energy is applied to said second reactor for supporting said chemical transformation.

Advantageously, heat and/or radiation, especially solar radiation, is used as said external energy.

The apparatus according to the invention for conducting the method according to the invention comprises first reactor with at least one extended reaction zone. It is characterised in that said first reactor has an inlet at a first side for introducing said first particles into said at least one reaction zone and an outlet at an opposite second side for removing said first particles from said at least one reaction zone, said at least one reaction zone comprises a packed bed of second particles, and said first reactor is arranged to receive an external energy with its at least one reaction zone.

According to an embodiment of the invention said at least one reaction zone of said first reactor is arranged in a solar cavity to receive concentrated solar radiation.

According to another embodiment of the invention said at least one reaction zone is oriented such that said inlet is located above said outlet with respect to the direction of gravitational force.

According to another embodiment of the invention said first reactor comprises a plurality of reaction zones, which are arranged one after the other between said inlet and said outlet.

According to another embodiment of the invention said second particles are larger than the first particles, and are of a spherical shape.

According to another embodiment of the invention said at least one reaction zone is arranged in a first tube extending between said inlet and said outlet, and a retention means is provided in said first tube, which is permeable for said first particles and holds said packed bed of second particles in place.

According to just another embodiment of the invention a vibration means is provided for generating mechanical and/or acoustical vibrations within the at least one reaction zone.

According to another embodiment of the invention said first reactor is connected with a second reactor to establish a closed cycle for said first particles. Preferably, said second reactor is a fluidised bed reactor.

According to another embodiment of the invention first and second conveying means are provided for conveying said first particles between said reactors. Especially, valves are provided between said second reactor and said inlet, and between said outlet and said second reactor.

According to another embodiment of the invention said second reactor is arranged to receive external energy.

According to another embodiment of the invention said second reactor comprises a second tube for the transport and thermal transformation of the first particles, which second tube is equipped with a gas inlet at one end and a gas outlet at the other end. Preferably, said first and second reactors are arranged in parallel. Advantageously, said first and second reactors are concentrically arranged, whereby said second reactor is enclosed by said first reactor. Especially, said first and second reactors are arranged such that the external energy enters the surrounding first reactor and part of said external energy crosses said first reactor and enters the central second reactor.

BRIEF DESCRIPTION OF THE DRAWINGS

The present invention is now to be explained more closely by means of different embodiments and with reference to the attached drawings.

Fig. 1     shows a schematic drawing of an arrangement collecting and concentrating solar radiation into a solar cavity, which contains an apparatus according to the invention;

Fig. 2     shows at the left (Fig. 2a) a schematic drawing of reacting particles falling through a single packed bed of larger particles in a first reactor undergoing a thermochemical transformation (e.g. thermal reduction of metal oxides, thermal gasification of carbonaceous feedstock, etc.), whereby heat is supplied in the form of concentrated solar energy and gaseous and solid products are evolved, while at the right (Fig. 2b) the larger particles are arranged in multiple smaller packed beds;

Fig. 3     shows a schematic of a vibrating first packed bed reactor in series with a pneumatically conveying second fluidized bed reactor, whereby circulating particles are reduced while transported through the packed bed of the first reactor, and oxidized in the conveying fluidized bed of the second reactor;

Fig. 4     shows a schematic of a modified apparatus of Fig. 3 with multiple vibrating packed beds of the first reactor in series with pneumatically conveying fluidized bed of the second reactor, whereby circulating particles are reduced while transported through the packed beds, and oxidized in the conveying fluidized bed;

Fig. 5 shows a schematic of a concentric arrangement of the reactors with pneumatically conveying fluidized bed reactor arranged within the annulus of the vibrating packed bed reactor; and

Fig. 6 shows a packed bed reactor similar to Fig. 2a in an exemplary vibrating arrangement.

DETAILED DESCRIPTION OF DIFFERENT EMBODIMENTS OF THE INVENTION

This invention provides a method of transporting first particles in a packed bed of second larger particles in a vibratory first reactor in which the transported first particles are undergoing a chemical transformation or acting as a heat transfer agent. The residence time of the transported first particles is influenced and controlled by the vibration frequency, bed height, and size of the second larger particles. In different embodiments, this invention has the ability to efficiently convert concentrated solar energy into solar based fuels and other solar derived products in a continuous or semi-continuous process.

In an embodiment, this invention is capable of producing hydrogen or syngas via solar-thermochemical cycles in a continuous process. Metal oxide intermediates are thermally reduced while transported in the packed bed of second particles, and subsequently fed into a second, pneumatically conveying fluidized bed reactor and oxidized with $H_2O$ and/or $CO_2$ to produce $H_2$ or syngas. The first particles are thereby continuously cycled between each reactor, resulting in continuous fuel production.

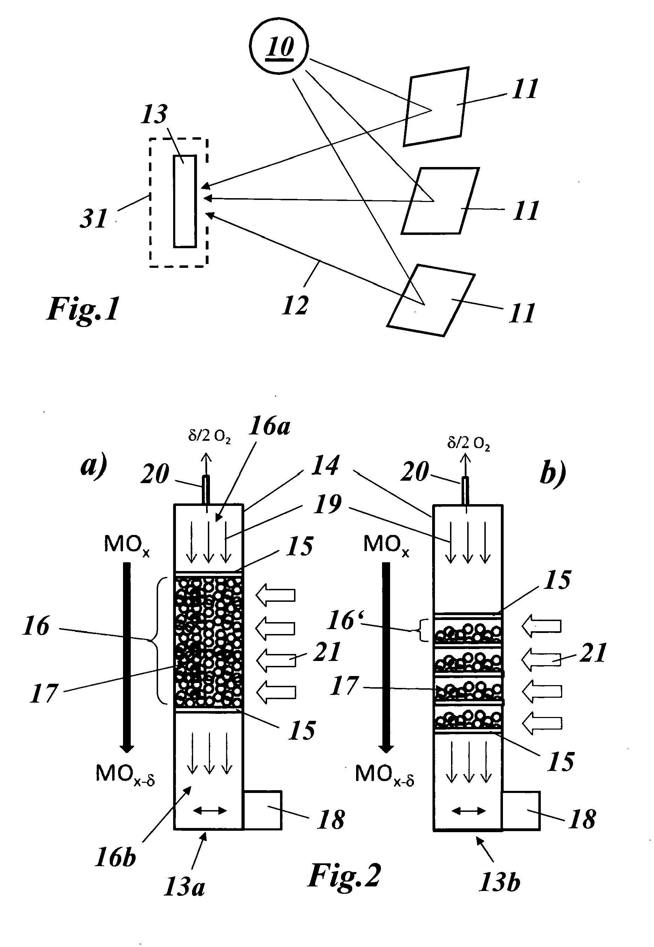

In an embodiment, the external energy supplied to the vibratory first reactor is in the form of concentrated solar energy. As shown in Fig. 1, solar radiation 21 emitted by the sun 10 is for example collected by means of heliostats 11, which concentrate the collected radiation into a solar cavity 31. In the interior of the solar cavity 31 a respective reactor 13 according to the invention is arranged. The transported first particles act as an intermediate in a solar-thermochemical redox cycle and are thermally reduced and collected at the outlet, to be used later in the second half of the redox cycle.

As seen in the embodiment of Fig. 2a, metal oxide particles ($MO_x$) 19 are transported through a reactor 13a containing in a tube 14 a reaction zone 16 with a vibrating packed bed of particles 17, which are held in place by retention means 15 being permeable for the metal oxide particles 19. By feeding external energy 21 into the reaction zone 16, the metal oxide particles 19 are thermally reduced ($mO_{x-\delta}$), thereby evolving $O_2$, which exits the reactor 13a through a gas exit 20. To vibrate the packed bed, a vibration means 18 can be attached to the reactor 13a. The vibration is preferably perpendicular to the transport direction of the metal oxide particles 19.

In another embodiment, the reaction zone and packed bed of the reactor 13b is divided into several smaller reaction zones 16' and respective packed beds, as seen in Fig. 1b, reducing the load on the particles below the packed bed surface and allowing them to move more freely.

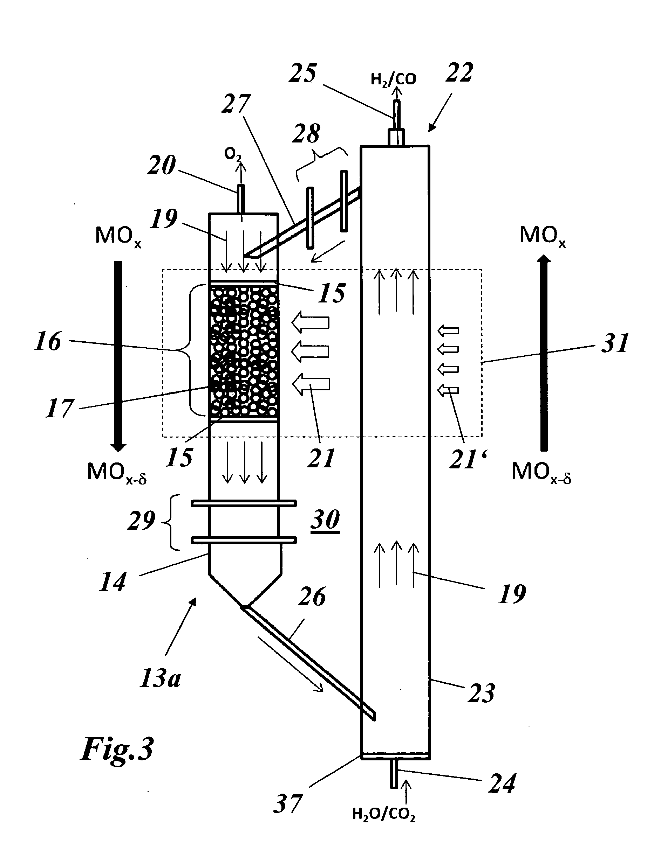

The external energy 21 supplied to the vibratory reactor 13a or 13b is preferably in the form of concentrated solar energy (see Fig. 1). A continuously operating thermochemical cycle is achieved by incorporating a second pneumatically conveying fluidized bed reactor 22 with a tube 23 in series with the first vibratory reactor 13a,b, as seen in Fig. 3-5. The particles are continuously circulated through reactors 13a,b and 22 as thermal reduction occurs in the vibratory reactor 13a,b and oxidation occurs in the fluidized bed reactor 22. Thus, the reaction tubes 14, 23 are not unnecessarily alternating heated and cooled, and continuous fuel production ($H_2$ and/or CO) is achieved. Gate valves or rotary valves 28, 29 are used to prevent gas crossover from one reactor to another.

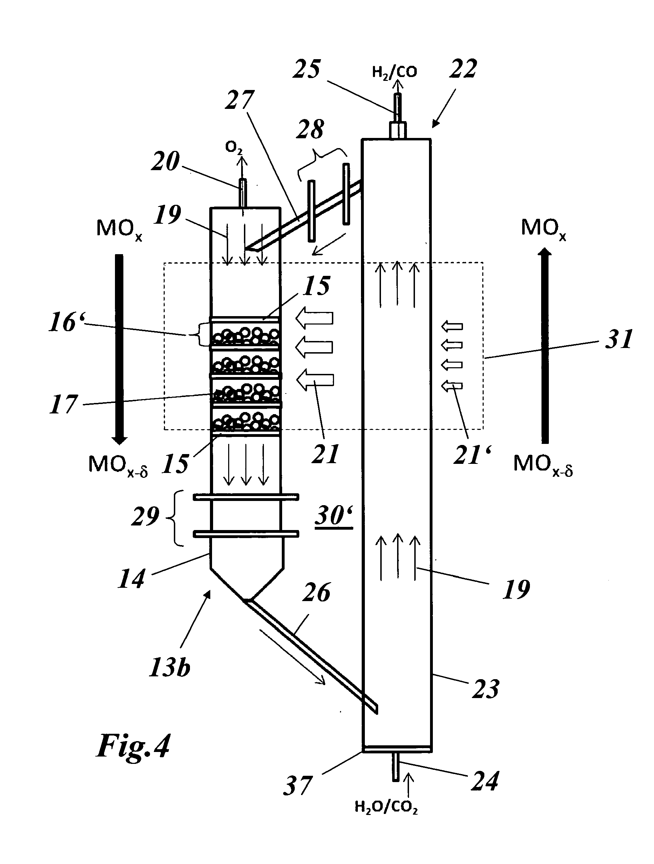

In an embodiment both reactors 13a,b and 22 may be placed in the same solar cavity 31. The oxidation reactor 22 is heated indirectly by the higher temperature vibratory reactor 13a,b, with external energy 21' and thus efficient heat recuperation is achieved. Again, the packed bed may be either a single one (reactor 13a in Fig. 3) or divided into several smaller packed beds (reactor 13b in Fig. 4).

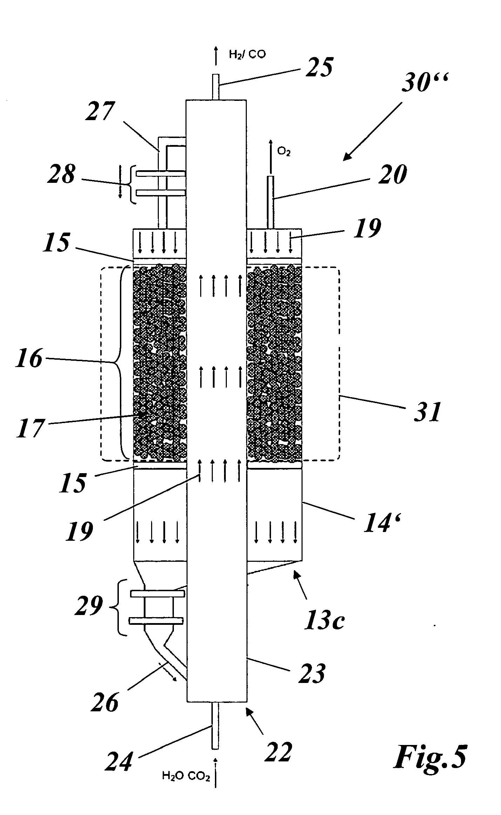

The fluidized bed reactor 22 may be concentrically arranged within the transporting packed bed reactor 13c, as shown in Fig. 5. In this arrangement, the fluidized bed reactor 22 is placed within the annulus of the packed bed reactor 13c and heated indirectly by the hotter packed bed. In addition to efficient heat recuperation, this configuration provides an efficient and compact means of arranging the tubes 23 and 14' within a solar cavity 31. The temperature of the fluidized bed of reactor 22 is controlled by the operating temperature of the packed bed of reactor 13c and thickness of the annulus. Again, the packed bed may be divided into several smaller beds (not shown).

Depending on the size of the reaction tubes 14, 23, there may be multiple singular vibrating packed bed reactors 13a,b (Fig. 2) or circulating reactors (Fig. 3-5) within a solar cavity 31. The solar cavity 31 may be either insulating or reflecting, and the solar radiation enters though an aperture with a simple opening (see Fig. 1) or through an opening covered with a window. The temperature of the reaction tubes 14, 23 is regulated by their arrangement within the cavity 31, their size, proximity to each other, the endothermicity and exothermicity of the reactions, gas flow rates, particle flow rates, and the amount of incident radiation. In an embodiment, the temperature of the transporting packed bed reactor 13a,b is between 1200 °C and 1700 °C, and the temperature of the fluidized bed reactor 22 is between 700 °C and 1200 °C.

The energy supplied to the reactors 13a,b and 22 may, on the other hand, be provided by heating elements, combustion of fuels, or other non-solar energy sources. These may be used in conjunction with concentrated solar energy to help maintain consistent temperatures within the reactors 13a,b and 22. This is useful when the degree of incident radiation is decreased or varying due, e.g., to cloud cover. Depending on the application, the non-solar energy source may be the only form of energy supplied.

Thus, the present invention provides a method of transporting first particles 19 through a packed bed of larger second particles 17, and is capable of being used in conjunction with concentrated solar receivers for the efficient conversion of sunlight into other usable forms of energy. This is particularly suited for solar thermochemical redox cycles, where metal oxide particles are reduced in one reaction using concentrated sunlight, and subsequently oxidized by $H_2O$ and/or $CO_2$ in a separate lower temperature reaction to produce $H_2$ and/or $CO$. By transporting metal oxide particles 19 in a vibrating packed bed, their residence time within the reaction zone 16 is easily controlled, ensuring that completion of the reaction is achieved in a manner sufficient to the process. In addition, heat transfer to the reacting particles is aided by their intimate contact with the second particles 17 in the packed bed, which are maintained at a constant temperature, specific to the requirements of the process.

Finally, the reacting particles 19 are not in contact with stagnant media for long periods of time, in contrast to batch reactors, eliminating the effects of possible undesired solid state reactions. By incorporating the reducing reactor 13a,b with another, oxidising reactor 22 in series, both redox reactions are capable of occurring simultaneously in a closed cycle to produce continuous products without heating and cooling each reactor repetitively. The particles 19 are simply circulated through both reactors 13a,b and 22, and operating conditions within both reactors are constant.

In addition to the decomposition and oxidation of metal oxide particles for solar fuels, this configuration is optimal for any process, in which the residence time of falling particles needs to be controlled. This would include processes such as the pyrolysis and gasification of carbonaceous materials, decomposition of metallic carbonates and other metallic salts, combustion reactions, and other solid-gas reactions such as chemical and atomic layer deposition processes. In these cases, the heat source or external energy 21, 21' may or may not be concentrated sunlight, depending on the application.

The four embodiments shown in Fig. 2-5 are all related to each other via one commonality, namely the transportation of falling first particles 19 through a packed bed of larger second particles 17. The four major embodiments include:

Embodiment 1 (Fig. 2a): A singular vibrating packed bed reactor 13a through which smaller particles 19 are transported.

Embodiment 2 (Fig. 2b): The equivalent of embodiment 1, but rather than a single reaction zone and vibrating bed 16, it is divided into multiple smaller reaction zones and beds 16'.

Embodiment 3 (Fig. 3): This embodiment includes the addition of a pneumatically conveying fluidized bed reactor 22 in series with the vibrating packed bed reactor 13a according to embodiment 1. This allows the particles to be processed in a "circulating" fashion (closed cycle) for continuous operation.

Embodiment 4 (Fig. 4): The equivalent of embodiment 3, but rather than a single reaction zone and vibrating bed 16, it is divided into multiple smaller reaction zones and beds 16'.

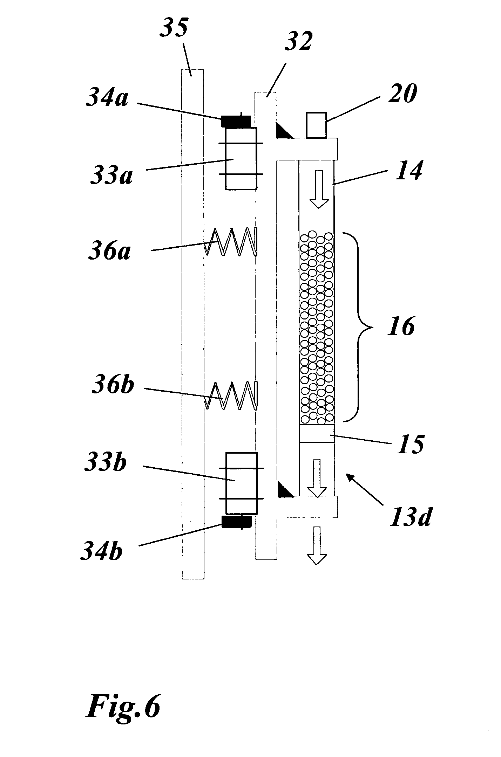

Embodiments 1 and 2, as shown in Figures 2a and 2b, are reactors 13a,b composed of a singular tube 14 in which, in a reaction zone 16, 16', a packed bed of particles 17 is supported within the tube 14 by retention means 15. The packed bed of particles 17 may be composed of inert ceramics such as $Al_2O_3$, $ZrO_2$, mullite or SiC. The reaction tube 14 may be composed of an inert high temperature ceramic, and the retention means 15 may be a membrane supporting the packed bed in form of a reticulated porous ceramic (RPC), or another porous ceramic which has pore size smaller than the size of the particles in the packed bed, but larger than those being transported through the bed. Vibration is applied by a vibration means 18 in the form of mechanical vibration (i.e. vibrating motor; see Fig. 6) or sonication in order to agitate the particles 19 in the packed backed. The rate of the falling particles 19 is dependent partly on the degree of agitation, but also on the height of the bed, and size of the inert particles 17.

Fig. 6 shows an example for a vibrating packed bed reactor 13d, which comprises, similar to Fig. 2, a reaction zone 16 with a packed bed within a tube 14. The tube 14 is mounted on a support 32, which is provided with motors 33a,b at the ends. The motors 33a,b each rotate an unbalanced mass 34a,b, thereby generating vibrations of the support 32 and tube 14. The support 32 with the tube 14 is elastically fixed to a base 35 by means of spring elements 36a,b. The frequency of the vibration can be easily controlled by controlling the rotation velocity of the motors 33a,b.

Within embodiments 1 and 2, the product gases (e.g. $O_2$) may flow concurrently or counter to the direction of the particles 19. This is accomplished by either

•    introducing an inert carrier gas flowing in the desired direction

- maintaining a vacuum on the side to which gas flow is directed

In these embodiments particles 19 are collected at the bottom of the reactor 13a,b and, in the case of a thermochemical redox cycle, are re-oxidized in a separate reactor (not shown in Fig. 2). Specifically the reduction of metal oxides is attractive, as their reaction rates are dependent on the type of metal oxide used, its size or surface area, and heat transfer properties. This configuration provides the control of residence time needed to accommodate a wide range of reaction rates. Additionally, because small particles 19 are used they are rapidly heated compared to bulk structures. Many times these structures have a high specific surface area, but the heat transfer properties are poor because radiation cannot penetrate their bulk structure. In terms of efficiency, it is ideal to heat these materials as rapidly as possible.

Specific metal oxides which may be thermally decomposed for use in a solar redox cycle are:

- Ferrites of the form $M_xFe_{3-x}O_4$, where M is a transition metal such as Co, Ni, Zn, Mn, or Fe

- Ceria-based oxides such as pure $CeO_2$ ceria doped with metals such as Sm, Gd, Fe, Co, Ni

- Iron aluminates such as $FeAl_2O_4$, or other spinel aluminates
  Other concentrated solar processes for which this reactor 13a,b may be suitable include

- the thermal pyrolysis of carbonaceous materials

- the thermal gasification of carbonaceous materials

- the thermal decomposition of metallic carbonates and metallic salts
  Non-solar processes (i.e. external energy sources such as combustion of fossil fuels, nuclear energy, heating elements, or simply the exothermicity of the reaction ) for which this reactor may be suited, are

- the pyrolysis of carbonaceous materials

- the gasification of carbonaceous materials

- the decomposition of metallic carbonates and metallic salts

- combustion of small particles

- surface modification of particles via solid gas reactions such as atomic layer deposition and chemical vapor deposition

Embodiments 3 and 4, which are shown in Fig. 3, 4 and 5, are composed of Embodiments 1 and or 2, with the addition of a second pneumatic conveying fluidized bed reactor 22. The purpose of this second reactor 22 is to circulate the particles 19 that are reduced in embodiments 1 or 2. The particles 19 are thermally reduced in the packed bed portion or reactor zone 16, 16' of the first reactor 13a,b and subsequently oxidized in the fluidized bed reactor. As shown in Fig. 3, 4 and 5 these reactors 13a-c and 22 may be arranged in a parallel configuration (Fig. 3 and 4) or concentrically (Fig. 5). The packed bed portion of the first reactor is composed of embodiment 1, with the addition of rotary or gate valves 28, 29 at its inlet and outlet, which prevent gas contamination between the reactors 13a-c and 22. A purge gas or vacuum may be inserted between these valves to purge out any unwanted gases (i.e. $O_2$ in the case of metal oxide decomposition).

After falling through the packed bed reaction zone 16, 16', particles 19 are then transported from the outlet 16b of reactor 13a,b via a vibrating tube, screw feeder, or other known conveyer 26 to the pneumatic conveying fluidized bed reactor 22. The fluidizing gas, which enters the reactor 22 through a gas inlet 24, may be $H_2O$, $CO_2$, or $O_2$ depending on the application. In the case of producing $H_2$, $H_2O$ will be used as the fluidizing gas. Likewise, $CO_2$ can be used as an oxidant to produce CO, and $H_2O$ and $CO_2$ can be used simultaneously to generate a syngas mixture ($H_2$/CO) and delivering it at a gas outlet 25 of the reactor 22. $O_2$ may be used as an oxidant when attempting to harness the large exotherms associated with several of these oxidation reactions.

Following oxidation, the particles 19 are circulated back to the inlet 16a of the transporting packed bed reactor 13a,b, and the product gases are collected at the gas outlet 25. Before entering the inlet 16a of the packed bed reactor 13a,b, the particles are again conveyed by means of a conveyor 27 through rotary or gate valves 27 to purge any unwanted gases and prevent contamination between the reactors. When this circulating process is used as a fuel generating apparatus 30, 30' or 30" in conjunction with concentrated solar energy as external energy 21, 21', it is capable of producing a continuous amount of fuel (either $H_2$ and/or CO) for as long as the external energy 21, 21' is provided.

Specific metal oxides, which may be cycled as particles 19, using solar energy as the energy source, in the fashion shown in embodiments 3 and 4 are:

- Ferrites of the form $M_xFe_{3-x}O_4$, where M is a transition metal such as Co, Ni, Zn, Mn, or Fe

- Ceria-based oxides such as pure $CeO_2$ ceria doped with metals such as Sm, Gd, Fe, Co, Ni

- Iron aluminates such as $FeAl_2O_4$, or other spinel aluminates

Non-solar processes (i.e. external energy sources such as combustion of fossil fuels, nuclear energy, heating elements, or simply the exothermicity of the reaction ) for which embodiments 3 or 4 may be suitable include the surface modification of the circulating particles 19 via atomic layer deposition.

List of reference numerals

| 10 | sun |
|---|---|
| 11 | heliostat |
| 12 | solar radiation |
| 13,13a-d | reactor (packed bed) |
| 14,14',23 | tube |
| 15 | retention means |
| 16,16' | reaction zone (packed bed) |
| 16a | inlet |
| 16b | outlet |
| 17,19 | particle |
| 18 | vibration means |
| 20 | gas exit |
| 21,21' | external energy |
| 22 | reactor (fluidised bed) |
| 24 | gas inlet |
| 25 | gas outlet |
| 26,27 | conveyor |
| 28,29 | valve (e.g. rotary or gate valve) |
| 30,30',30" | fuel generating apparatus |
| 31 | solar cavity |
| 32 | support |
| 33a,b | motor |
| 34a,b | unbalanced mass |
| 35 | base |
| 36a,b | spring element |
| 37 | distributor plate |

**Claims**

1. Method for thermochemically reacting a particulate material, comprising the steps of providing first particles (19) of said material, introducing said first particles (19) into a first reactor (13; 13a-d), applying external energy (21) to said first particles (19) in said first reactor (13; 13a-d) such that said first particles (19) undergo a thermochemical reaction, and removing said thermochemically treated first particles (19) from said first reactor (13; 13a-d), **characterised in that** said first reactor (13; 13a-d) has at least one extended reaction zone (16, 16'), the external energy (21) is applied to said at least one reaction zone (16, 16') comprising means (17) for constraining particle movement there through, and the first particles (19) are moved through said at least one reaction zone (16, 16') for undergoing said thermochemical reaction such that they have a predetermined mean residence time within said at least one reaction zone (16, 16').

2. Method according to claim 1, **characterised in that** said at least one reaction zone (16, 16') comprises as a particle movement constraining means a packed bed of second particles (17), which are larger then said first particles (19), said first particles are removed through said packed bed of second particles (17) by means of at least one driving force, said packed bed of second particles (17) extends in vertical direction, the gravitational force is used as said at least one driving force, and said second particles (17) are of spherical shape.

3. Method according to claim 1 or 2, **characterised in that** the size of said first particles (19) ranges from 5 nm to 1 mm.

4. Method according to one of the claims 1 to 3, **characterised in that** mechanical and/or acoustical vibrations are introduced into said at least one reaction zone (16, 16') to enhance movement of said first particles (19) through said at least one reaction zone (16, 16'), and that said mechanical and/or acoustical vibrations are used to control the mean residence time of said first particles in said at least one extended reaction zone (16, 16').

5. Method according to one of the claims 1 to 4, **characterised in that** said first reactor (13b) comprises a plurality of successive reaction zones (16'), and said first particles (19) are moved through said successive reaction zones (16') for undergoing said thermochemical reaction.

6. Method according to one of the claims 1 to 5, **characterised in that** the material of said first particles (19) comprises a metal oxide, and said thermo--chemical reaction is the thermal reduction of said metal oxide.

7. Method according to one of the claims 1 to 5, **characterised in that** the material of said first particles (19) comprises a metal oxide, and said thermo-chemical reaction is the carbothermal reduction of said metal oxide.

8. Method according to claim 6 or 7, **characterised in that** a metal oxide of the formula $Ce_{1-x}M_xO_2$ is used, where M is a metal consisting of Ce, Gd, Sm, Fe, Zr, Y, or a combination thereof.

9. Method according to claim 6 or 7, **characterised in that** a metal oxide of the formula $M_xFe_{3-x}O_4$ is used, where M is a metal consisting of Fe, Co, Ni, Mn, Zn, or a combination thereof.

10. Method according to claim 6 or 7, **characterised in that** a metal oxide of the formula $M_xO_y$ is used, where M is a metal consisting of Zn, Fe, Sn, Ti, Ce, or a combination thereof.

11. Method according to one of the claims 1 to 10, **characterised in that** heat is used as said external energy (19).

12. Method according to one of the claims 1 to 10, **characterised in that** radiation is used as said external energy (19) ,and said radiation is concentrated solar radiation (12).

13. Method according to one of the claims 1 to 12, **characterised in that** said thermochemically treated first particles (19) are chemically transformed in a second process, thereby reversing said thermochemical reaction, said chemically transformed first particles (19) are fed back into the first reactor (13; 13a-d), thereby establishing a closed cycle for said first particles (19), said thermochemical treatment is a reduction, and said chemical transformation is an oxidation, said oxidation is done by bringing said first particles (19) in contact with an oxidising agent in a second reactor (22), said second reactor (22) is a fluidised bed reactor, said oxidising agent comprises $H_2O$ and/or $CO_2$, external energy (21') is applied to said second reactor (22) for supporting said chemical transformation, and heat and/or radiation, especially solar radiation (12), is used as said external energy (21').

14. Apparatus (13a-d; 22; 30, 30', 30") for conducting the method according to one of the claims 1 to 13, comprising a first reactor (13; 13a-d) with at least one extended reaction zone (16, 16'), **characterised in that** said first reactor (13; 13a-d) has an inlet (16a) at a first side for introducing said first particles (19) into said at least one reaction zone (16, 16') and an outlet (16b) at an opposite second side for removing said first particles (19) from said at least one reaction zone (16, 16'), said at least one reaction zone (16, 16') comprises a packed bed of second particles (17), said first reactor (13; 13a-d) is arranged to receive an external energy (21) with its at least one reaction zone (16, 16'), said at least one reaction zone (16, 16') of said first reactor (13; 13a-d) is arranged in a solar cavity (31) to receive concentrated solar radiation, and said at least one reaction zone (16, 16') is oriented such that said inlet (16a) is located above said outlet (16b) with respect to the direction of gravitational force.

15. Apparatus according to claim 14, **characterised in that** said first reactor comprises a plurality of reaction zones (16'), which are arranged one after the other between said inlet (16a) and said outlet (16b).

16. Apparatus according to claim 14 or 15, **characterised in that** said second particles (17) are larger than the first particles (19), and are of a spherical shape.

17. Apparatus according to one of the claims 14 to 16, **characterised in that** said at least one reaction zone (16, 16') is arranged in a first tube (14, 14') extending between said inlet (16a) and said outlet (16b), a retention means (15) is provided in said first tube (14, 14'), which is permeable for said first particles (19) and holds said packed bed of second particles (17) in place, a vibration means (18; 33a,b, 34a,b) is provided for generating mechanical and/or acoustical vibrations within the at least one reaction zone (16, 16'), said first reactor (13, 13a-d) is connected with a second reactor (22) to establish a closed cycle for said first particles (19), said second reactor (22) is a fluidised bed reactor, first and second conveying means (26, 27) are provided for conveying said first particles (19) between said reactors (13, 13a-d; 22), and valves (28, 29) are provided between said second reactor (22) and said inlet (16a), and between said outlet (16b) and said second reactor (22).

18. Apparatus according to one of the claim 17, **characterised in that** said second reactor (22) is arranged to receive external energy (21'), and said second reactor (22) comprises a second tube (23) for the transport and thermal transformation of the first particles (19), which second tube (23) is equipped with a gas inlet (24) at one end and a gas outlet (25) at the other end.

19. Apparatus according to claim 18, **characterised in that** said first and second reactors (13, 13a-d; 22) are arranged in parallel, said first and second reac-

**EP 2 520 361 A1**

tors (13c; 22) are concentrically arranged, whereby said second reactor (22) is enclosed by said first reactor (13c), and said first and second reactors (13c; 22) are arranged such that the external energy (21) enters the surrounding first reactor (13c) and part (21') of said external energy (21) crosses said first reactor (13c) and enters the central second reactor (22).

**Fig.1**

**Fig.2**

**Fig.3**

**Fig.4**

*Fig.5*

**Fig.6**

Europäisches
Patentamt

European
Patent Office

Office européen
des brevets

# EUROPEAN SEARCH REPORT

Application Number

EP 11 00 3735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2010/136442 A1 (ABANADES STEPHANE [FR] ET AL) 3 June 2010 (2010-06-03)<br>* paragraphs [0011] - [0013], [0107] - [0118], [0119] - [123;125] *<br>* claims 1,2,9 *<br>* figure 4 * | 1-13<br><br>14-19 | INV.<br>B01J8/08<br>B01J8/12<br>B01J8/16<br>B01J8/38<br>B01J19/12<br>C01B3/06 |
| X,D<br>A | US 2006/188433 A1 (WEIMER ALAN W [US] ET AL) 24 August 2006 (2006-08-24)<br>* paragraphs [0038], [0059] - [0068], [0074] - [0081], [0084], [0105], [0112] - [0117] *<br>* figures 2,3,7; examples 3-5 * | 1-13<br><br>14-19 | C01B3/10<br>C01B13/02<br>C21B15/00<br>C22B5/10<br>C22B5/16 |
| X<br>A | US 2008/086946 A1 (WEIMER ALAN W [US] ET AL) 17 April 2008 (2008-04-17)<br>* paragraphs [0042] - [0046], [0050] - [0070], [0095] *<br>* figures 1,4,11; examples 6-8 * | 1-13<br><br>14-19 | |
| X<br><br>A | US 4 192 371 A (DARTOY JACQUES [CH] ET AL) 11 March 1980 (1980-03-11)<br>* column 8, line 52 - column 9, line 10 *<br>* figure 8 * | 1-13<br><br>14-19 | TECHNICAL FIELDS SEARCHED (IPC)<br>B01J<br>C01B<br>C21B<br>C22B |
| X<br><br><br><br><br><br><br><br>A | Aldo Steinfeld: "Liquid fuels from Water, CO2, and Solar energy",<br>Presentation made at Institute IMDEA Energy, Madrid (Spain),<br>4 April 2011 (2011-04-04), pages 1-31, XP55009588,<br>[retrieved on 2011-10-14]<br>* slides 7-20 * | 1-13<br><br><br><br><br><br><br><br>14-19 | |
| | | -/-- | |

The present search report has been drawn up for all claims

| Place of search | Date of completion of the search | Examiner |
|---|---|---|
| The Hague | 17 October 2011 | Baumlin, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 2 520 361 A1

EUROPEAN SEARCH REPORT

Application Number

EP 11 00 3735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & Aldo Steinfeld: "Conferencia de Aldo Steinfeld "Liquid fuels from Water, CO2, and Solar energy"", Conference at the Campus EOI, Madrid (Spain), 4 April 2011 (2011-04-04), XP55009589, Retrieved from the Internet: URL:http://www.energy.imdea.org/Communicat ion/Events/Events/Event/conferencia/de/ald o/steinfeld/liquid/fuels/from/water/co2/an d/solar/energy/tabid/1545/itemid/1966/type /evento/Default.aspx [retrieved on 2011-10-14] | | |
| X | NICOLAS PIATKOWSKI ET AL: "Solar-driven gasification of carbonaceous feedstock - a review", ENERGY & ENVIRONMENTAL SCIENCE, vol. 4, 21 December 2010 (2010-12-21), pages 73-82, XP55009585, ISSN: 1754-5692, DOI: 10.1039/c0ee00312c | 14-19 | |
| A | * pages 77,78 * * figure 4 * | 1-13 | TECHNICAL FIELDS SEARCHED (IPC) |
| A | JAMES E MILLER ET AL: "Metal oxide composites and structures for ultra-high temperature solar thermochemical cycles", JOURNAL OF MATERIALS SCIENCE, KLUWER ACADEMIC PUBLISHERS, BO, vol. 43, no. 14, 30 April 2008 (2008-04-30), pages 4714-4728, XP019607400, ISSN: 1573-4803 * page 4715, right-hand column * | 1-19 | |
| A | US 2010/129287 A1 (GABRIEL KAMIEL SAMY [CA] ET AL) 27 May 2010 (2010-05-27) * paragraphs [0065] - [0084]; figure 1 * | 1-19 | |

-/--

The present search report has been drawn up for all claims

| Place of search | Date of completion of the search | Examiner |
|---|---|---|
| The Hague | 17 October 2011 | Baumlin, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

Application Number

EP 11 00 3735

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/175533 A1 (THOMAS THEODORE J [US] ET AL) 11 August 2005 (2005-08-11)<br>* the whole document *<br>----- | 1-19 | |
| A | PIATKOWSKI N ET AL: "Experimental investigation of a packed-bed solar reactor for the steam-gasification of carbonaceous feedstocks",<br>FUEL PROCESSING TECHNOLOGY, ELSEVIER BV, NL,<br>vol. 90, no. 3,<br>9 October 2008 (2008-10-09), pages 360-366, XP025949647,<br>ISSN: 0378-3820, DOI:<br>10.1016/J.FUPROC.2008.10.007<br>* the whole document *<br>----- | 1-19 | |

TECHNICAL FIELDS
SEARCHED      (IPC)

The present search report has been drawn up for all claims

| Place of search | Date of completion of the search | Examiner |
|---|---|---|
| The Hague | 17 October 2011 | Baumlin, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 2 520 361 A1**

## ANNEX TO THE EUROPEAN SEARCH REPORT
## ON EUROPEAN PATENT APPLICATION NO.

EP 11 00 3735

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2011

| Patent document cited in search report | | Publication date | Patent family member(s) | | Publication date |
|---|---|---|---|---|---|
| US 2010136442 | A1 | 03-06-2010 | AU 2008228107 A1<br>EP 2129622 A2<br>FR 2913010 A1<br>WO 2008113944 A2 | | 25-09-2008<br>09-12-2009<br>29-08-2008<br>25-09-2008 |
| US 2006188433 | A1 | 24-08-2006 | NONE | | |
| US 2008086946 | A1 | 17-04-2008 | AU 2007289219 A1<br>CN 101522862 A<br>EP 2082006 A1<br>WO 2008027980 A1 | | 06-03-2008<br>02-09-2009<br>29-07-2009<br>06-03-2008 |
| US 4192371 | A | 11-03-1980 | CH 617503 A5<br>FR 2361148 A1<br>IT 1083945 B | | 30-05-1980<br>10-03-1978<br>25-05-1985 |
| US 2010129287 | A1 | 27-05-2010 | NONE | | |
| US 2005175533 | A1 | 11-08-2005 | NONE | | |

For more details about this annex : see Official Journal of the European Patent Office, No. 12/82

20

**REFERENCES CITED IN THE DESCRIPTION**

**Patent documents cited in the description**

- US 20060188433 A1

**Non-patent literature cited in the description**

- **PERKINS, C. ; A.W. WEIMER.** Solar-Thermal Production of Renewable Hydrogen. *Aiche Journal,* 2009, vol. 55 (2), 286-293
- **TURNER, J. et al.** Renewable hydrogen production. *International Journal of Energy Research,* 2008, vol. 32 (5), 379-407
- **ETIEVANT, C.** Solar Energy Materials. *SOLAR HIGH-TEMPERATURE DIRECT WATER SPLITTING - A REVIEW OF EXPERIMENTS IN FRANCE,* 1991, vol. 24 (1-4), 413-440
- **BAYKARA, S.Z.** Experimental solar water thermolysis. *International Journal of Hydrogen Energy,* 2004, vol. 29 (14), 1459-1469
- **MCQUILLAN, B.W. et al.** Meal sulfate water splitting thermochemical hydrogen production cycles. *The Second International Workshop on Hydrogen,* 2007
- **MILLER, J.E. et al.** Metal oxide composites and structures for ultra-high temperature solar thermochemical cycles. *Journal of Materials Science,* 2008, vol. 43 (14), 4714-4728
- **CHUEH, W.C. et al.** High-Flux Solar-Driven Thermochemical Dissociation of CO2 and H2O Using Nonstoichiometric Ceria. *Science,* 2010, vol. 330 (6012), 1797-1801
- **STAMATIOU, A. ; P.G. LOUTZENHISER ; A. STEINFELD.** Solar Syngas Production via H2O/CO2-Splitting Thermochemical Cycles with Zn/ZnO and FeO/Fe3O4 Redox Reactions. *Chemistry of Materials,* 2010, vol. 22 (3), 851-859
- **CHUEH, W.C. ; S.M. HAILE.** Ceria as a Thermochemical Reaction Medium for Selectively Generating Syngas or Methane from H2O and CO2. *Chemsuschem,* 2009, vol. 2 (8), 735-739
- **ALLENDORF, M.D.** Two-Step Water Splitting Using Mixed-Metal Ferrites: Thermodynamic Analysis and Characterization of Synthesized Materials. *Energy & Fuels,* 2008, vol. 22 (6), 4115-4124

- **KODAMA, T. et al.** Thermochemical hydrogen production by a redox system of ZrO2-supported Co(II)-ferrite. *Solar Energy,* 2005, vol. 78 (5), 623-631
- **KODAMA, T. ; N. GOKON ; R. YAMAMOTO.** Thermochemical two-step water splitting by ZrO2-supported NixFe3-xO4 for solar hydrogen production. *Solar Energy,* 2008, vol. 82 (1), 73-79
- **KODAMA, T. ; Y. NAKAMURO ; T. MIZUNO.** A two-step thermochemical water splitting by iron-oxide on stabilized zirconia. *Journal of Solar Energy Engineering-Transactions of the Asme,* 2006, vol. 128 (1), 3-7
- **SCHEFFE, J.R. ; J.H. LI ; A.W. WEIMER.** A spinel ferrite/hercynite water-splitting redox cycle. *International Journal of Hydrogen Energy,* 2010, vol. 35 (8), 3333-3340
- **ABANADES, S. ; G. FLAMANT.** Thermochemical hydrogen production from a two-step solar-driven water-splitting cycle based on cerium oxides. *Solar Energy,* 2006, vol. 80 (12), 1611-1623
- **ABANADES, S. et al.** Investigation of reactive cerium-based oxides for H-2 production by thermochemical two-step water-splitting. *Journal of Materials Science,* vol. 45 (15), 4163-4173
- **KANEKO, H. et al.** Reactive ceramics of CeO2-MOx (M = Mn, Fe, Ni, Cu) for H-2 generation by two-step water splitting using concentrated solar thermal energy. *Energy,* 2007, vol. 32 (5), 656-663
- **KANEKO, H. et al.** Rotary-type solar reactor for solar hydrogen production with two-step water splitting process. *Energy & Fuels,* 2007, vol. 21 (4), 2287-2293
- **DIVER, R.B. et al.** Solar thermochemical water-splitting ferrite-cycle heat engines. *Proceedings of the ASME International Solar Energy Conference,* 2007, 301-309
- **ROEB, M. et al.** Operational strategy of a two-step thermochemical process for solar hydrogen production. *International Journal of Hydrogen Energy,* 2009, 4537-45